# EUROPEAN PATENT SPECIFICATION

(11) **EP 1 364 540 B1**
(45) Date of publication and mention of the grant of the patent: **17.08.2005**
(21) Application number: 02722120.9
(22) Date of filing: 21.02.2002
(51) Int. Cl.: H04Q 3/00, H04L 12/24

(54) **METHOD AND APPARATUS FOR PERFORMANCE IMPROVEMENT OF MULTI-SERVICE NETWORKS**
VERFAHREN UND VORRICHTUNG ZUR VERBESSERUNG DER LEISTUNGSFÄHIGKEIT IN MEHRFACHDIENSTNETZWERKEN
ANALYSE DES PERFORMANCES D'UN RESEAU

(30) Priority: 22.02.2001 US 791476
(43) Date of publication of application: 26.11.2003
(73) Proprietor: Telefonaktiebolaget LM Ericsson (publ), 164 83 Stockholm (SE)
(72) Inventor: ROSU, Corneliu, S-122 42 Enskede (SE); GABRIELSSON, Jerry, S-186 50 Vallentuna (SE); Östman,Lasse, SE-11750 STOCKHOLM (SE); ANDERSSON, Yngve, Carl-Erik, S-138 34 Älta (SE); ABERG, Magnus, S-125 51 Älvsjö (SE); RODERMANN, Matthias, 1130 Vienna (AT); CARLSSON, Bernt, S-187 41 Täby (SE)
(74) Representative: Lövgren, Tage
(86) International application number: PCT/EP2002/001883
(87) International publication number: WO 2002/069650

(56) References cited:
- EP-A- 0 849 912
- EP-A- 1 043 871
- US-A- 5 359 649

## Description

### Background of the Invention

The invention disclosed and claimed herein generally pertains to a multi-service network, that is, a network wherein different types of singles service communication networks or traffic streams may be connected together, to form different types of communication paths. More particularly, the invention pertains to a method and apparatus for use in analyzing performance of multi-service networks; in order to improve performance thereof. Even more particularly, the invention pertains to an arrangement for enabling the performance of different types of communication paths in a multi-service network to be compared with one another, by means of a common standard.

As is well known by those of skill in the art, there is an ever-increasing need to be able to interconnect different single-service networks, each associated with a distinctly different technology, in order to establish desired communication paths or channels. Obvious examples of single-service communication systems and technologies include, but are by no means limited to, mobile phone and other wireless telecommunication systems, laridline or wireline telecommunication systems such as the Public Switched Telephone Network (PSTN), and the Internet Protocol (IP) network; used to access the Internet. Each of these single-service systems, as well as others which will occur to those skilled in the art, are hereinafter referred to as communication services. To illustrate the challenges involved in interconnecting communication services of different types, it is observed that wireless and wireline telephone networks generally employ traditional circuit switches for connectivity. On the other hand, the IP network uses packets to carry voice, data, and multimedia traffic, and thus must be packet switched.

An existing system for optimizing the traffic-carrying capacity of a single-service telecommunications network is disclosed in U.S. Patent No. 5,359,649 to Rosu et al. Congestion in the network is controlled by identifying and limiting defective devices and routes with elevated levels of congestion. The network may be reconfigured in real time in response to the occurrence of network events to optimize traffic capacity. However, Rosu applies only to single-service networks, and does not disclose any way to compare the performance of different types of communication paths.

The need to interconnect communication services as described above has led to the development of mulit-service networks. A multi-service network generally comprises a number of different single-service networks, or communication services, which must be interconnected with one another. The multi-service network further comprises the equipment or components employed to establish or set up the connections. It will be readily apparent that communication paths established within a multi-service network can be either heterogeneous or homogeneous. A heterogeneous communication path comprises interconnected components of two or more different types of communication services, whereas a homogeneous communication path exclusively comprises components of only a single type of communication service. It will be further apparent that a communication path in a multi-service network may be thought of as a chain of connection points or elements, extending through the network between two users.

While progress has been made previously in the development of multi-service networks, further development may be impeded or constrained by certain significant problems. In particular, there is currently no methodology available which makes it possible to evaluate the overall deficiencies of a multi-service network. A principal difficulty is that a multi-service network, by its nature, must be able to combine or connect communication services associated with very different technologies. However, different service technologies frequently use different parameters to describe important operational characteristics, such as losses. Thus, at present, there is generally no uniform point of view for evaluating the impact of losses on an overall multi-service network, regardless of the type of service or technology involved. Moreover, while both vendors and operators generally have well specified performance improvement and network design processes for the different communication technologies used in a multi-service network, such processes do not always take into consideration the impact of other traffic streams or services on the network. In most cases, network management centers are dedicated or separated for different technologies. Accordingly, measures taken in one part of the multi-service network can have consequences on other parts of the network which use other technologies, wherein the consequences cannot be readily foreseen or predicted. Thus, there is a need for measurable common standards or criteria, which can be used to evaluate the end-to-end performance of any communication path which may be set up within a multi-service network. Such standards must consider all elements of the chain of connections which, collectively, are employed to set up or establish any specified communication path.

### Summary of the Invention

The invention is generally directed to a multi-service network, which comprises a number of different communication services and is operable to establish different types of homogeneous and heterogeneous communication paths. As stated above, each homogeneous communication path comprises interconnected components of only a single one of the communication services, and each heterogeneous communication path comprises interconnected components of different services. It is anticipated that an embodiment of the invention will be able to provide a common basis for evaluating performance of all types of communication paths which can be constructed through or within a multi-service network. Such common basis for evaluation will apply to both heterogeneous and homogeneous communication paths, regardless of the technologies respectively associated therewith. Thus, the performance of respective communication paths can readily be compared with one another, leading to a number of benefits and advantages as described hereinafter.

In one aspect, the invention provides system operators with standard measureables to establish trends and proactively deal with them. The measureables are related to the end-to-end performance of a network path, considering all elements of the connection chain. Thus, analysis is not fragmented amongst different technologies. Moreover, the measureable standards may be readily used and easily understood by operations and maintenance staff who do not have advanced academic degrees, or equivalent high levels of training.

The invention, in one embodiment, is a method which includes the step of acquiring data pertaining to at least one common performance parameter for each type of communication path in a multi-service network as described above. The method further comprises the steps of constructing a performance graph for each type of communication path, from the data respectively acquired therefor, and comparing the performance graph of any one type of communication path of the network with the performance graph of any other type of communication path. The performance graph of a particular type of communication path may also be compared with a performance graph for the same path, or type of path, acquired at a different time and/or under different operating conditions.

In the invention, it has been recognized that all of the communication paths which can be set up in the multi-service network have certain features or characteristics in common, regardless of whether respective paths are heterogeneous or homogenous, and regardless of the technology or technologies associated therewith. More specifically, every path may be characterized as an attempt to establish communication between a first user and a second user, and may be further characterized by whether the effort is successful or unsuccessful. Thus, in accordance with the invention, data pertaining to these attempts and successes, as well as to the level of losses, may be used to provide the performance parameters referred to above, and performance graphs may be constructed therefrom.

It is to be noted that in telephony, the establishment of a communication path between two users is referred to as a "call." In contrast, the establishment of a path between two computer users, such as by means of the Internet, is referred to as a "connection." Still other terms may be used in other communication technologies. Thus, in order to provide uniformity, the term "connection" is used generically herein to refer to the establishment of any homogenous or heterogeneous communication path through the multi-service network, as described above.

In view of the above, in a preferred embodiment of the invention at least one of the performance parameters comprises a representation of the number of connections successfully completed through a communication path, relative to the number of connections attempted. Such representation may, for example, express successful connections as a percentage of the total number of connections attempted. Preferably, the method further includes the step of selectively altering a specified characteristic of the multi-service network, and then determining effects of the selected alteration on the performance of respective communication paths. Preferably also, the multi-service network includes wireless, wireline, and/or internet communication services.

In one useful embodiment, the data acquisition step comprises selectively operating the multi-service network to establish communication paths of the respective different types, and then measuring the values of the performance parameters for each established communication path. Alternatively, the data acquisition step may comprise accessing a database, such as a database of connection/call detail records, or a centralized connection/call information database.

By providing a common standard or basis for comparing different types of interconnected service paths in a multi-service network, the invention enables operators thereof to determine which types of service inter-connections are most profitable. Such information may be extremely useful to network operators in their business planning. Also, it is anticipated that the invention will enable operators to more readily locate or identify deficiencies within a multi-service network, so that limited resources can be concentrated to correct the deficiencies. For example, simply by comparing the performance graphs of two different types of communication paths, it could become readily apparent that there were significantly more faults in one path than in the other. As a further advantage, the invention will more readily enable certain evaluations and analyses in a multi-service network. For example, in a model of the network, a characteristic or feature of one of the communication services may be selectively altered. An embodiment of the invention can then be employed to determine the "global impact" of the alteration, that is, the impact or effect thereof on each of the other services and on different interconnections thereof.

### Brief Description of the Drawings

Figure 1 is a schematic diagram showing a multi-service network, together with certain single services associated therewith, which may be used in connection with an embodiment of the invention.
Figure 2 is a schematic diagram showing a matrix pertaining to different single communication services which is useful for illustrating a basic concept of the invention.
Figure 3 depicts a performance graph for an embodiment of the invention.
Figure 4 is a block diagram depicting a simplified arrangement for constructing the performance graph of Figure 3.

### Detailed Description of the Preferred Embodiment

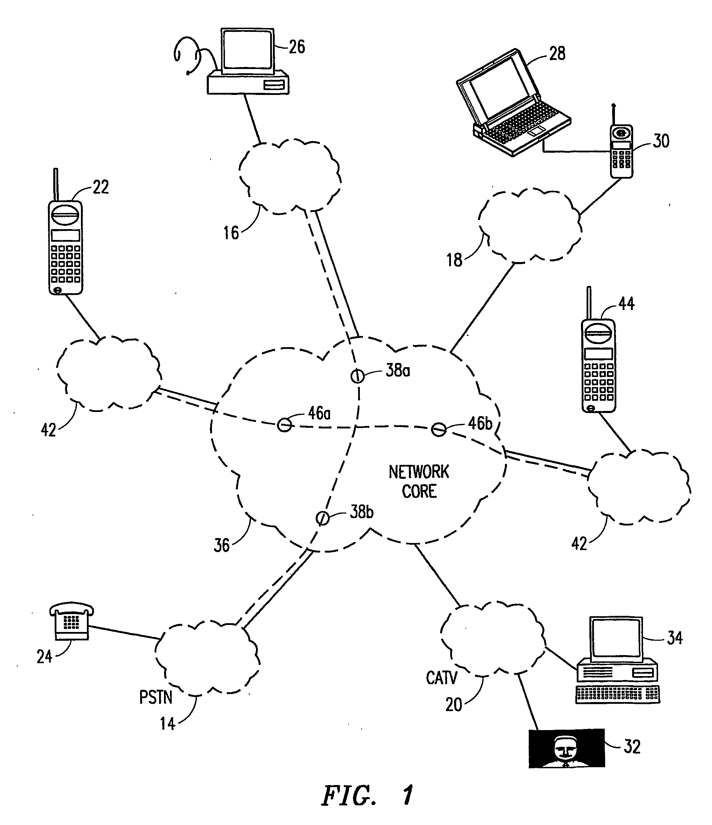

Referring to Figure 1, there is shown a multi-service network 10 which, as described above, comprises a number of different types of communication services 12-20 which may, for example, be different single service networks. Thus, communication service 12 comprises a wireless telephone network, and users thereof may employ mobile phones 22 for transmission and reception. Communication service 14 comprises a land line or wire line network such as PSTN, and users may employ a conventional wire line telephone 24 therewith. However, fax machines and other equipment conventionally designed for direct connection to a wire line network may also be used therewith. Communication service 16 comprises a network such as the IP network for connecting personal computers (PC) 26 and the like to the Internet. Similarly, communication service 18 comprises a network for coupling a laptop computer 28 to the Internet, through a wireless phone 30. Communication service 20 comprises a cable TV network for transmitting and receiving video images 32, by means of a video input/output (I/O) device 34, such as a video camera or display device.

Referring further to Figure 1, there is shown multi-service network 10 provided with a network core 36 connected to each of the communication services 12-20. Core 36 comprises an array of equipment and other components (not shown) which are collectively operable to establish bi-directional paths for communicating information between users of any two of the services 12-20. Suitable equipment and components will readily occur to those of skill in the art and include, by way of example, a product of assignee Telefonaktiebolaget LM Ericsson publ, which is known commercially as the Media Gateway AXC 711. It is to be emphasized, however, that there is no intent to limit the invention thereto. Also by way of example and not limitation, Figure 1 shows network core 36 operated to connect wire line service 14 to IP service 16, at nodes 38a and 38b, in order to set up a communication path 40 extending between the services 14 and 16. Thus, multi-service network 10 may be readily employed to transmit information between a user of telephone 24 and a user of PC 26.

It is to be emphasized further that multi-service network 10 can include other types of communication services besides or in addition to services 12-20. Moreover, to emphasize the diverse utility of multi-service network 10, Figure 1 shows a wireless communication service 42 connected thereto or included therein, wherein service 42 may be similar or identical to wireless service 12 described above. By judicious operation of network core 36, wireless communication services 12 and 42 can be connected together at nodes 46a and 46b, in order to set up a communication path 48 extending between wireless services 12 and 42. Thus, multi-service network 10 may also be used to transmit information between users of the same type of communication service, such as the respective users of mobile phones 22 and 44. As described above, path 40 extending between services 14 and 16 may be referred to as a heterogeneous communication path, whereas the path 48 extending between services 12 and 42 may be referred to as a homogeneous communication path.

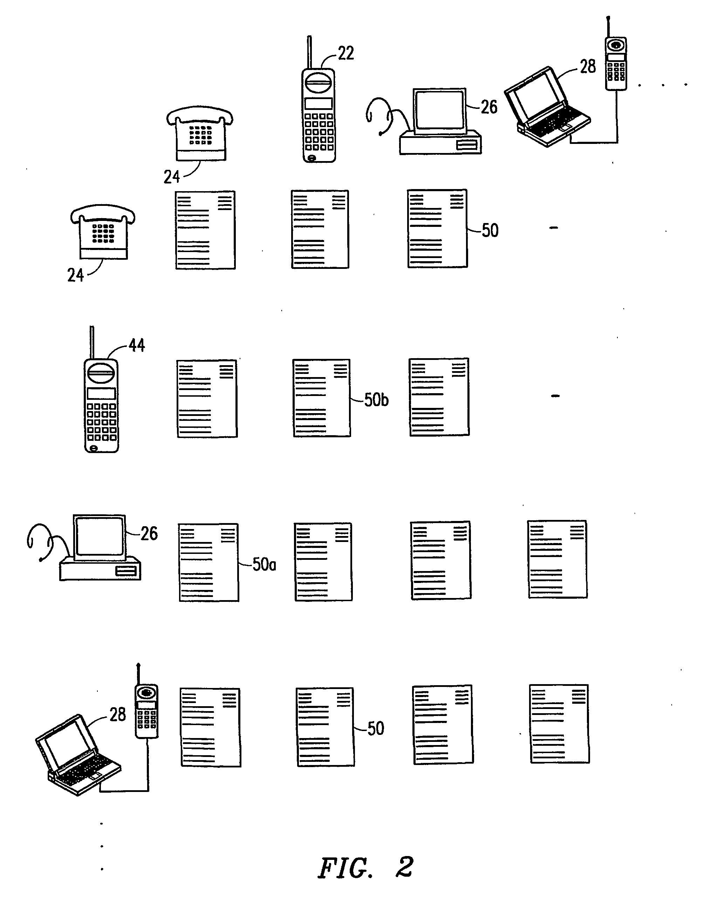

Referring to Figure 2, there is shown a network service oriented matrix, which is useful for illustrating compilation of a traffic profile of multi-service network 10. Each row and column of the matrix is identified by one of the I/O devices 22-28, respectively associated with communication services 12-18 shown in Figure 1. It is to be understood that a terminal associated with each device may be readily connected to terminals associated with other devices. Each position of the matrix contains a performance graph 50, described hereinafter in further detail, which sets forth values of certain performance parameters for one of the communication paths of multi-service network 10. More specifically, the performance graph positioned at the intersection of a particular row and column of the matrix is constructed from performance data of a communication path which is formed by interconnecting the communication services associated with the particular row and column, respectively. Thus, performance graph 50a is constructed from data acquired from heterogeneous communication path 40 shown in Figure 1, connecting telephone 24 and PC 26. In like manner, performance graph 50b is constructed from data acquired from homogenous communication path 48. It is to be understood that a homogenous communication path could be established from two separate networks of the same type, such as two mobile phone networks connected together through network core 36. Alternatively, a homogenous path could be established from components of a single service or network interconnected with network core 36.

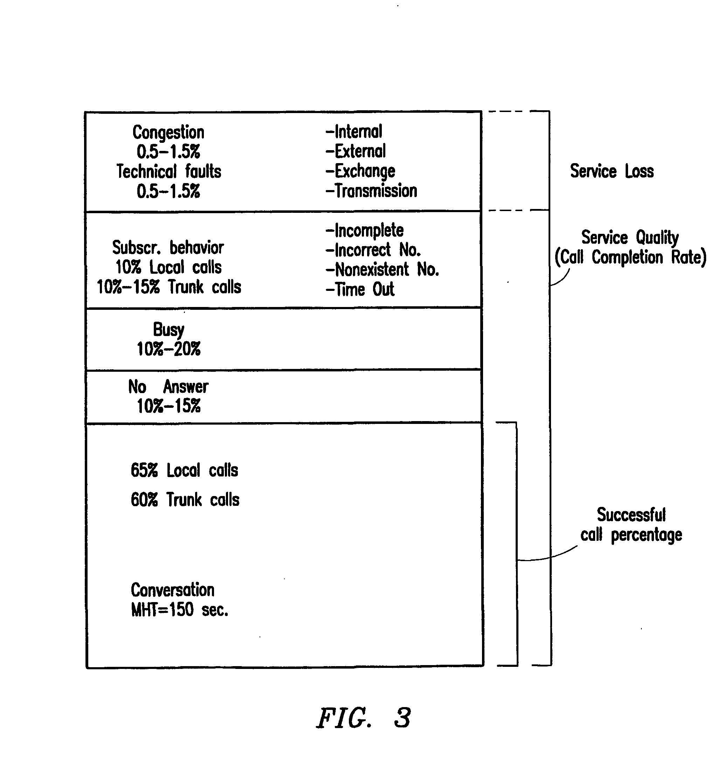

Referring to Figure 3, there is shown a performance graph 50 of a type disclosed in commonly assigned U.S. Patent No. 5,359,649, which names one of the co-inventors herein as a patentee. The performance graph 50 of Figure 3, which is associated with a particular communication path of multi-service network 10, is usefully obtained from service quality statistics measurements. The parameter identified as service loss is the total loss of service due to congestions, lost cells or delays and technical faults, and is expressed as a percentage of the total connections, as such term is defined above, which are attempted. In evaluating service loss, a differentiation is made between technical losses, such as those due to exchange faults and transmission faults, and traffic losses such as those due to internal and external exchange congestion, system delays, and to network traffic management actions. Another communication path performance variable, service quality (estimated successful connections established rate) is calculated as 100% minus the service loss. This variable includes all connections which do not result in communication between users or subscribers, and thus includes losses resulting from subscriber behavior, rather than losses resulting from technical faults and traffic congestion. As also illustrated in Figure 3, subscriber behavior losses include connections in which the initiating subscriber is timed out, an incorrect or nonexistent number or address is accessed, and the initiating subscriber hangs up or disconnects prematurely (incomplete connection). Further losses, associated with the recipient subscriber, occur when the recipient subscriber is busy or does not answer, the recipient equipment is out of order, and the recipient is barred from responding to incoming connections. The successful connection percentage is the percentage of connections which result in actual communication. Thus, the performance graph shown in Figure 3 provides very useful information, that is, the number of connections which are successful from the subscriber's point of view, as a percentage of a specified total number of connections attempted, over the communication path with which the performance graph is associated.

It will be appreciated that when performance graphs are available for each communication path which can be set up in multi-service network 10, the information for each graph can be evaluated and compared with the information for other graphs. Such analysis will indicate, for example, the components of the network which have the greatest rates of service loss, and which should therefore be the focus of available corrective resources. Also, if a characteristic of one of the communication services of the network is changed or altered, performance graphs generated for respective communication paths before the change can be compared with corresponding graphs generated after the change. Such comparisons will be very useful in assessing the impact which the change in a single service may have throughout a multi-service network, or upon a model thereof. For example, in one important application, comparison of performance graphs in accordance with the invention could provide early notification that an overload condition was developing in one type of service, which could lead to overload or deterioration of other types of services or the entire network. Such early notification would enable corrective action to be taken right away.

It is to be emphasized that the type of parameter data used in constructing respective performance graphs 50 is applicable to all communication paths which can be established in the multi-service network. That is, data pertaining to connections attempted, to connections lost and to connections successfully established or set up is measurable and has the same significance for every communication path, regardless of the technology or technologies respectively associated therewith. Accordingly, the performance graphs described above provide common criteria or standards for evaluation and analysis in a multi-service network. Moreover, in addition to enabling meaningful comparisons between two different types of communications paths, the graphs provide a useful tool for evaluating performance of a particular type of communication path, at different times or under different operating conditions. For example, the successful connections rate of a communication path could be weighted by a factor such as 1%. A change of more than 1% in the successful connections rate for the path would be noted and regarded as significant.

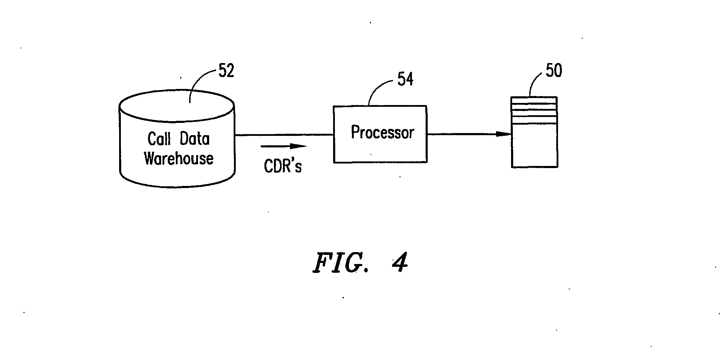

In an alternative embodiment of the invention, the data required to construct respective performance graphs may be acquired from Connection/Call Detail Records (CDR's), rather than from direct measurement. Suppliers of telecommunication services frequently generate and store CDR's for each call or connection. CDR's may be retained in a connection/call data warehouse, a facility for storing normalized data for long periods of time. Referring to Figure 4, there is shown a data warehouse 52 supplying CDR's to a processor 54. Processor 54 is operable to extract information from received CDR's which pertain to a particular communication path, and to construct a performance graph 50 from the extracted information which pertains to the particular path. Alternatively, processor 54 can be operated to generate a number of performance graphs internally, and to make comparisons therebetween to provide useful conclusions in regard to the performance of an associated multi-service network.

In a further embodiment of the invention, data for constructing the performance graphs may be supplied to processor 54 from a large centralized data base. For example, certain countries maintain very extensive data bases of all telecommunication calls and connections. In another useful application, an embodiment of the invention may be used in a proactive mode. In such embodiment, for a selected type of communication path a series of test connections or calls are directed from a central location to different preselected locations, addresses or numbers. A test connection, as used herein, refers to an effort to establish a communication path with a preselected location only to see if the path can be successfully set up, not to communicate with a user or subscriber at the location. Data pertaining to the results, that is, the number of connections attempted and the number of connections successfully established, are recorded and used to construct a performance graph and traffic profile for the selected path. If the acquired data indicates that the successful connection rate is too low, or decreases by an amount greater than a weighting factor such as 1%, corrective action may be taken. Such proactive operation has the benefit of detecting problems in the selected communication path, so that the problems can be fixed or corrected before subscribers are affected by them.

Although a preferred embodiment of the present invention has been illustrated in the accompanying Drawings and described in the foregoing Detailed Description, it will be understood that the invention is not limited to the embodiment disclosed, but is capable of numerous rearrangements, modifications and substitutions without departing from the spirit of the invention as set forth and defined by the following claims.

## Claims

1. A method of analyzing performance of a communications network wherein the performance of each of a plurality of communication paths is compared to identify an optimum path, said method being **characterized by**:
implementing the method in a multi-service network that provides a number of different communication services, and establishes different types of homogeneous and heterogeneous communication paths;
acquiring data pertaining to at least one common performance parameter for each of the types of communication paths;
constructing a performance graph for each of the types of communication paths from the data respectively acquired therefor; and
comparing the performance graph of any one of the communication paths of the multi-service network with the performance graph of any other of the communication paths to generate specified information pertaining to performance of the network.

2. The method of Claim 1 wherein:
said at least one performance parameter comprises a representation of the number of connections successfully completed, relative to a specified number of connections attempted.

3. The method of Claim 1 wherein:
said method further includes the step of altering a characteristic of the multi-service network, and employing the comparing step to determine effects of the alteration on respective communication paths of the network.

4. The method of Claim 1, wherein said data acquisition step comprises:
selectively operating the multi-service network to establish communication paths of each of the different types; and
measuring the values of the respective performance parameters for each of the established communication paths.

5. The method of Claim 1, wherein:
said data acquisition step comprises accessing a database comprising connection charging records.

6. The method of Claim 1, wherein:
said data acquisition step comprises accessing a centralized connection information database.

7. The method of Claim 1, wherein:
said multi-service network includes at least one service selected from a group comprising wireless, wireline, and Internet communication services.

8. The method of Claim 1 wherein said data acquisition step comprises:
for a selected type of communication path, initiating efforts to implement a series of test connections to set up communication paths between a specified central location and each of a number of preselected locations; and
recording the results of the test connection efforts for use in detecting an error in the selected type of communication path.

9. The method of Claim 1 further comprising:
operating the multi-service network to establish first and second communication paths of the same type;
wherein the steps of acquiring data and constructing performance graphs for the first and second communication paths are performed while the first and second communication paths are being operated under selectively different conditions.

10. The method of Claim 1 wherein said data acquisition step comprises:
measuring the values of the performance parameters for each of the established communication paths.

11. An apparatus for analyzing performance of a communications network in which the performance of each of a plurality of communication paths is compared to identify an optimum path, said apparatus being **characterized by**:
a data base containing data pertaining to at least one common performance parameter for each of a number of different types of homogeneous and heterogeneous communication paths that are established in the network;
a processor disposed to construct a performance graph for each of the types of communication paths from data respectively pertaining thereto which are contained in the database; and
wherein the processor is further disposed to compare the performance graph of any one of the communication paths with the performance graph of any other of the communication paths to generate specified information pertaining to performance of the network.

12. The apparatus of Claim 11 wherein:
said at least one performance parameter comprises a representation of the number of connections successfully completed, relative to a specified number of connections attempted.

13. The apparatus of Claim 11 wherein:
said processor is adapted to generate information pertaining to effects on performance of the network resulting from alteration of a specified characteristic thereof.

14. The apparatus of Claim 11 wherein:
said network includes at least one service selected from a group comprising wireless, wireline, and Internet communication services.

## Patentansprüche

1. Verfahren zum Analysieren der Leistung eines Kommunikationsnetzwerks, wobei die Leistung jedes einer Mehrzahl von Kommunikationswegen verglichen wird, um einen bestmöglichen Weg zu identifizieren und das Verfahren **gekennzeichnet ist durch**:
Realisieren des Verfahrens in einem Mehrfachdienstnetzwerk, das eine Anzahl von verschiedenen Kommunikationsdiensten bereitstellt und verschiedene Arten von homogenen und heterogenen Kommunikationswegen herstellt;
Erfassen von Daten, die wenigstens einen gemeinsamen Leistungsparameter für jede der Arten von Kommunikationswegen betreffen;
Erstellen eines Leistungsgraphen für jede der Arten von Kommunikationswegen aus den jeweils dafür erfassten Daten; und
Vergleichen des Leistungsgraphen irgendeines der Kommunikationswege des Mehrfachdienstnetzwerks mit dem Leistungsgraphen irgendeines anderen der Kommunikationswege, um bestimmte Informationen zu erzeugen, welche die Leistung des Netzwerks betreffen.

2. Verfahren nach Anspruch 1, wobei:
der wenigstens eine Leistungsparameter eine Darstellung der Anzahl von erfolgreich hergestellten Verbindungen in Bezug auf eine bestimmte Anzahl von versuchten Verbindungen umfasst.

3. Verfahren nach Anspruch 1, wobei:
das Verfahren ferner die Schritte des Änderns eines Merkmals des Mehrfachdienstnetzwerks und des Einsetzens des Vergleichsschritts, um die Auswirkungen der Änderungen auf die jeweiligen Kommunikationswege des Netzwerks festzustellen, umfasst.

4. Verfahren nach Anspruch 1, wobei der Datenerfassungsschritt umfasst:
selektives Betreiben des Mehrfachdienstnetzwerks, um Kommunikationswege jeder der verschiedenen Arten herzustellen; und
Messen der Werte der jeweiligen Leistungsparameter für jeden der hergestellten Kommunikationswege.

5. Verfahren nach Anspruch 1, wobei:
der Datenerfassungsschritt das Zugreifen auf eine Datenbank umfasst, welche Anschlussgebühraufzeichnungen umfasst.

6. Verfahren nach Anspruch 1, wobei:
der Datenerfassungsschritt das Zugreifen auf eine zentralisierte Verbindungsinformationsdatenbank umfasst.

7. Verfahren nach Anspruch 1, wobei:
das Mehrfachdienstnetzwerk wenigstens einen Dienst umfasst, der aus einer Gruppe ausgewählt wird, welche drahtlose, Draht- und Internetkommunikationsdienste umfasst.

8. Verfahren nach Anspruch 1, wobei der Datenerfassungsschritt umfasst:
Einleiten von Versuchen für eine ausgewählte Art von Kommunikationsweg, eine Reihe von Testverbindungen zu realisieren, um Kommunikationswege zwischen einer bestimmten Zentralstelle und jeder einer Anzahl von im Voraus gewählten Stellen aufzubauen; und
Aufzeichnen der Ergebnisse der Testverbindungsversuche zur Verwendung beim Erkennen eines Fehlers in der ausgewählten Art von Kommunikationsweg.

9. Verfahren nach Anspruch 1, welches ferner umfasst:
Betreiben des Mehrfachnetzwerks, um erste und zweite Kommunikationswege derselben Art herzustellen;
wobei die Schritte des Erfassens von Daten und des Erstellens von Leistungsgraphen für die ersten und zweiten Kommunikationswege ausgeführt werden, während die ersten und zweiten Kommunikationswege unter selektiv unterschiedlichen Bedingungen betrieben werden.

10. Verfahren nach Anspruch 1, wobei der Datenerfassungsschritt umfasst:
Messen der Werte der Leistungsparameter für jeden der hergestellten Kommunikationswege.

11. Vorrichtung zum Analysieren der Leistung eines Kommunikationsnetzwerks, in welchem die Leistung jedes einer Mehrzahl von Kommunikationswegen verglichen wird, um einen bestmöglichen Weg zu identifizieren und die Vorrichtung **gekennzeichnet ist durch**:
eine Datenbank, welche Daten enthält, die wenigstens einen gemeinsamen Leistungsparameter für jede einer Anzahl von verschiedenen Arten von homogenen und heterogenen Kommunikationswegen, die im Netzwerk hergestellt werden, betreffen;
einen Prozessor, der dazu bestimmt ist, einen Leistungsgraphen für jede der Arten von Kommunikationswegen aus Daten, welche diese jeweils betreffen und welche in der Datenbank enthalten sind, zu erstellen; und
wobei der Prozessor ferner dazu bestimmt ist, den Leistungsgraphen irgendeines der Kommunikationswege mit dem Leistungsgraphen irgendeines anderen der Kommunikationswege zu vergleichen, um bestimmte Informationen zu erzeugen, welche die Leistung des Netzwerks betreffen.

12. Vorrichtung nach Anspruch 11, wobei:
der wenigstens eine Leistungsparameter eine Darstellung der Anzahl von erfolgreich hergestellten Verbindungen in Bezug auf eine bestimmte Anzahl von versuchten Verbindungen umfasst.

13. Vorrichtung nach Anspruch 11, wobei:
der Prozessor so ausgelegt ist, dass er Informationen erzeugt, welche die Auswirkungen auf die Leistung des Netzwerks betreffen, die aus der Änderung eines bestimmten Merkmals davon resultieren.

14. Vorrichtung nach Anspruch 11, wobei:
das Netzwerk wenigstens einen Dienst umfasst, der aus einer Gruppe ausgewählt ist, welche drahtlose, Draht- und Internetkommunikationsdienste umfasst.

## Revendications

1. Procédé d'analyse de performance d'un réseau de communications dans lequel la performance de chacune d'une pluralité de voies de communication est comparée pour identifier une voie optimale, ledit procédé étant **caractérisé par** :
la mise en oeuvre du procédé dans un réseau multiservice qui propose un certain nombre de différents services de communication et établit différents types de voies de communication homogènes et hétérogènes ;
l'acquisition de données concernant au moins un paramètre de performance commun pour chacun des types de voies de communication ;
la construction d'un graphique de performance pour chacun des types de voies de communication à partir des données acquises respectivement pour celui-ci ; et
la comparaison du graphique de performance de l'une quelconque des voies de communication du réseau multiservice avec le graphique de performance de n'importe quelle autre des voies de communication pour générer une information spécifiée concernant la performance du réseau.

2. Procédé selon la revendication 1, dans lequel :
ledit, au moins un, paramètre de performance comprend une représentation du nombre de connexions menées à bien avec succès, relativement à un nombre spécifié de connexions essayées.

3. Procédé selon la revendication 1, dans lequel :
ledit procédé comprend en outre l'étape de modification d'une caractéristique du réseau multiservice et d'utilisation de l'étape de comparaison pour déterminer des effets de la modification sur des voies de communication respectives du réseau.

4. Procédé selon la revendication 1, dans lequel ladite étape d'acquisition de données comprend .
la mise en oeuvre sélective du réseau multiservice pour établir des voies de communication de chacun des différents types ; et
la mesure des valeurs des paramètres de performance respectifs pour chacune des voies de communication établies.

5. Procédé selon la revendication 1, dans lequel :
ladite étape d'acquisition de données comprend l'accès à une base de données comprenant des enregistrements de charge de connexions.

6. Procédé selon la revendication 1, dans lequel :
ladite étape d'acquisition de données comprend l'accès à une base de données centralisée d'informations de connexion.

7. Procédé selon la revendication 1, dans lequel :
ledit réseau multiservice comprend au moins un service choisi dans un groupe comprenant des services de communication sans fil, câblés et par Internet.

8. Procédé selon la revendication 1, dans lequel ladite étape d'acquisition de données comprend :
pour un type sélectionné de voie de communication, l'initiation d'efforts pour exécuter une série de connexions d'essai afin d'établir des voies de communication entre un emplacement central spécifié et chacun d'un certain nombre d'emplacements préalablement choisis ; et
l'enregistrement des résultats des efforts de connexion d'essai pour une utilisation dans la détection d'une erreur dans le type sélectionné de voie de communication .

9. Procédé selon la revendication 1, comprenant en outre :
la mise en oeuvre du réseau multiservice pour établir des première et seconde voies de communication du même type ;
dans lequel les étapes d'acquisition de données et de construction de graphiques de performance pour les première et seconde voies de communication sont exécutées tandis que les première et seconde voies de communication sont mises en oeuvre sous des conditions sélectivement différentes.

10. Procédé selon la revendication 1, dans lequel ladite étape d'acquisition de données comprend :
la mesure des valeurs des paramètres de performance pour chacune des voies de communication établies.

11. Appareil pour l'analyse de performance d'un réseau de communications dans lequel la performance de chacune d'une pluralité de voies de communication est comparée afin d'identifier une voie optimale, ledit appareil étant **caractérisé par** :
une base de données contenant des données concernant au moins un paramètre commun de performance pour chacun d'un certain nombre de différents types de voies de communication homogènes et hétérogènes qui sont établies dans le réseau ;
un processeur disposé de façon à construire un graphique de performance pour chacun des types de voies de communication à partir de données les concernant respectivement qui sont contenues dans la base de données ; et
dans lequel le processeur est en outre disposé de façon à comparer le graphique de performance de l'une quelconque des voies de communication au graphique de performance de n'importe quelle autre des voies de communication afin de générer une information spécifiée concernant la performance du réseau.

12. Appareil selon la revendication 11, dans lequel :
ledit, au moins un, paramètre de performance comprend une représentation du nombre de connexions menées à bien avec succès, relativement à un nombre spécifié de connexions essayées.

13. Appareil selon la revendication 11, dans lequel :
ledit processeur est conçu pour générer une information concernant des effets sur la performance du réseau résultant d'une modification d'une caractéristique spécifiée de celui-ci.

14. Appareil selon la revendication 11, dans lequel :
ledit réseau comprend au moins un service choisi dans un groupe comprenant des services de communication sans fil, câblés et par Internet.
